Europäisches Patentamt

European Patent Office

Office européen des brevets

(19)

(11) Numéro de publication : **0 116 497 B1**

(12) **FASCICULE DE BREVET EUROPÉEN**

(45) Date de publication du fascicule du brevet :
26.03.86

(51) Int. Cl.⁴ : **C 02 F 3/28**, C 02 F 3/10

(21) Numéro de dépôt : **84400168.5**

(22) Date de dépôt : **25.01.84**

(54) **Appareil pour la filtration anaérobie d'eaux résiduaires.**

(30) Priorité : **03.02.83 FR 8301680**

(43) Date de publication de la demande :
**22.08.84 Bulletin 84/34**

(45) Mention de la délivrance du brevet :
**26.03.86 Bulletin 86/13**

(84) Etats contractants désignés :
**BE CH DE GB IT LI**

(56) Documents cités :
**US-A- 3 956 128
US-A- 4 002 705
WATER RESEARCH, vol. 11, no. 3, 1977, Pergamon
Press, (GB) E.S.K. CHIAN et al.: "Treatment of high
strength acidic wastewater with a completely mixed
anaerobic filter", pages 295-304**

(73) Titulaire : **"DEGREMONT" Société dite:
183, Avenue du 18 Juin 1940
F-92508 Rueil-Malmaison Cédex (FR)**

(72) Inventeur : **Bernard, Jacques
5, Bd Victor Hugo
F-78100 Saint-Germain-en-Laye (FR)**
Inventeur : **Rovel, Jean Marie
74, rue Sophie Rodrigues
F-92500 Rueil-Malmaison (FR)**
Inventeur : **Nicol, Roger
20, rue Auguste Gervais
F-92130 Issy-les-Moulineaux (FR)**
Inventeur : **Prevot, Claude
Rue du Belvédère de la Ronce
F-92410 Ville-d'Avray (FR)**

(74) Mandataire : **Armengaud, Charles
Cabinet ARMENGAUD AINE 3, Avenue Bugeaud
F-75116 Paris (FR)**

**Description**

L'invention concerne un appareil pour la filtration anaérobie d'eaux résiduaires avec production simultanée de biogaz, du type filtre à garnissage parcouru de bas en haut par l'eau à traiter. Le filtre suivant l'invention est plus particulièrement utilisable pour le traitement d'eaux résiduaires industrielles à forte pollution carbonée, telles que eaux résiduaires des industries agro-alimentaires, des industries de fermentation, des industries chimiques de synthèse, de l'industrie de la pâte à papier, etc... permettant une production de biogaz importante, de 0,4 à 0,6 m³ par kilo de DCO (Demande Chimique en Oxygène) éliminée.

On connaît déjà divers appareils de ce type, consistant en des filtres anaérobies contenant un garnissage de matériau en matière plastique et parcourus de bas en haut par l'eau à traiter.

Ces filtres sont de deux sortes :

Les uns comportent un garnissage de matériau tel qu'anneaux de matière plastique disposés en vrac, cette disposition en vrac permettant une colonisation rapide du matériau par les micro-organismes anaérobies et une accumulation de biomasse importante donc un traitement efficace. Cependant, il existe dans ce cas des risques importants de colmatage du filtre ainsi que des risques de tassement du matériau ; en outre, la surface spécifique est souvent insuffisante en particulier dans le cas où le matériau est constitué par des anneaux en matière plastique de gros diamètre.

Les autres filtres connus comportent un garnissage de matériau ordonné, par exemple des tubes ou des plaques ondulées en matière plastique connus sous différentes marques, telles que « Cloisonyle », « Plasdek », etc... Cette disposition permet d'éviter les risques de colmatage mais présente par ailleurs d'autres inconvénients : la colonisation du matériau par les micro-organismes est très lente ; il existe en outre des risques de décrochage de la culture fixée en cas de variations brutales de fonctionnement.

L'appareil suivant l'invention pallie ces inconvénients tout en conservant les avantages des filtres cités.

L'invention consiste en un appareil pour la filtration anaérobie d'eaux résiduaires consistant en un filtre à garnissage parcouru de bas en haut par l'eau à traiter et dans lequel le biogaz produit est recueilli à la partie supérieure de l'appareil, caractérisé en ce qu'il comporte deux couches superposées de matériau de garnissage (A et B) séparées par une couche intermédiaire de matériau (C), le matériau (A) constituant la couche inférieure étant un matériau ordonné et les matériaux (B et C) étant des matériaux en vrac, la surface spécifique du matériau (B) étant plus importante que celle offerte par le matériau (A) et le matériau (C) étant constitué par des corps creux agencés, conformés ou dimensionnés de telle sorte que le matériau n'obture pas les canaux formés par le matériau (A) et supporte le matériau (B).

Suivant l'invention, le matériau de garnissage (A) de la couche inférieure est constitué de préférence par des tubes disposés parallèlement et verticalement, possédant une surface spécifique importante pouvant aller jusqu'à 200 m²/m³ permettant la fixation et l'accumulation des micro-organismes.

Suivant une autre disposition de l'invention, le matériau ordonné est constitué par des plaques ondulées.

Ces tubes ou plaques forment des canaux, par exemple de 50 à 100 mm de largeur, disposés verticalement sur une hauteur de, par exemple, 1 à 6 m.

Dans une disposition préférée de l'invention le matériau A est en matière plastique du type connu sous les marques « Cloisonyle » ou « Plasdek » par exemple ; cependant tout autre matériau ordonné d'importante surface spécifique, disposé en tubes ou plaques, peut être utilisé sans sortir du cadre de l'invention.

Suivant l'invention le matériau de garnissage B de la couche supérieure est constitué par un matériau disposé en vrac, de préférence par des anneaux connus en eux-mêmes à surface ondulée ou non, multicanaux ou non, dont la surface spécifique est très importante, plus importante que celle offerte par le matériau A, supérieure par exemple à 200 m²/m³, permettant une fixation très rapide et très importante des micro-organismes.

Ces anneaux, de diamètre compris avantageusement entre 20 et 100 mm sont disposés en vrac sur une hauteur pouvant aller de 1 à 6 m.

Dans une forme de réalisation préférée de l'invention, le matériau B est en matière plastique du type connu sous la marque « Flocor R ». Tout autre matériau de surface spécifique très importante peut être utilisé sans sortir du cadre de l'invention.

Suivant l'invention, le matériau C de la couche intermédiaire de séparation des matériaux A et B est constitué par des corps creux cylindriques, disposés en vrac et agencés, conformés ou dimensionnés de telle sorte que le matériau n'obture pas les canaux formés par le matériau ordonné A et supporte le matériau B.

Dans une forme de réalisation de l'invention le matériau C est constitué par des corps annulaires, de diamètre très important par rapport à leur hauteur, par exemple égal ou supérieur à 4 fois leur hauteur, leur diamètre étant au moins 1,5 fois celui des tubes ou canaux que présente le matériau ordonné A, de façon à ce que ces anneaux reposent sur les tubes ou canaux de ce matériau sans les obturer. La surface spécifique de ces corps annulaires est relativement faible, voisine par exemple de 100 m²/m³.

Le matériau C est disposé en une couche intermédiaire de hauteur de préférence égale à 1 à 5 fois la hauteur des anneaux de matériau B.

Avantageusement le matériau C est en matière plastique du type connu sous les marques « Flocor » ou « Mass Transfer » par exemple.

L'appareil comporte à sa partie supérieure une goulotte de reprise de l'eau traitée munie d'une grille de protection ; cette goulotte comporte une garde d'eau de quelques centimètres formant un organe de sécurité vis-à-vis de toute surpression et mise sous vide accidentelles.

Suivant une autre caractéristique de l'invention, un dispositif d'inversion des flux d'eau à traiter et d'eau traitée entrant dans l'appareil et en sortant, permet, par simple ouverture et fermeture de vannes, de procéder à l'évacuation des boues formées se déposant à la partie inférieure de l'appareil.

L'appareil suivant l'invention présente de nombreux avantages : il permet un démarrage rapide du processus de méthanisation par la couche supérieure de matériau en vrac B. En outre, les risques de colmatage de cette couche B sont fortement diminués par le fait que l'eau à traiter traverse d'abord la couche de matériau ordonné A dans laquelle se liquéfient les matières en suspension avant d'atteindre la couche B.

Par ailleurs, la possibilité d'inverser les flux d'eau à traiter et d'eau traitée sortant et entrant dans l'appareil permet une évacuation simple et facile des boues et atténue encore les risques de colmatage.

On a décrit ci-après, uniquement à titre d'exemple, une forme de réalisation de l'invention, en référence aux dessins ci-joints sur lesquels :

la Figure 1 est une vue schématique en coupe de l'appareil suivant l'invention,

la Figure 2 est, à plus grande échelle, une perspective partielle, avec arrachement de l'appareil, montrant l'agencement des différentes couches de matériaux.

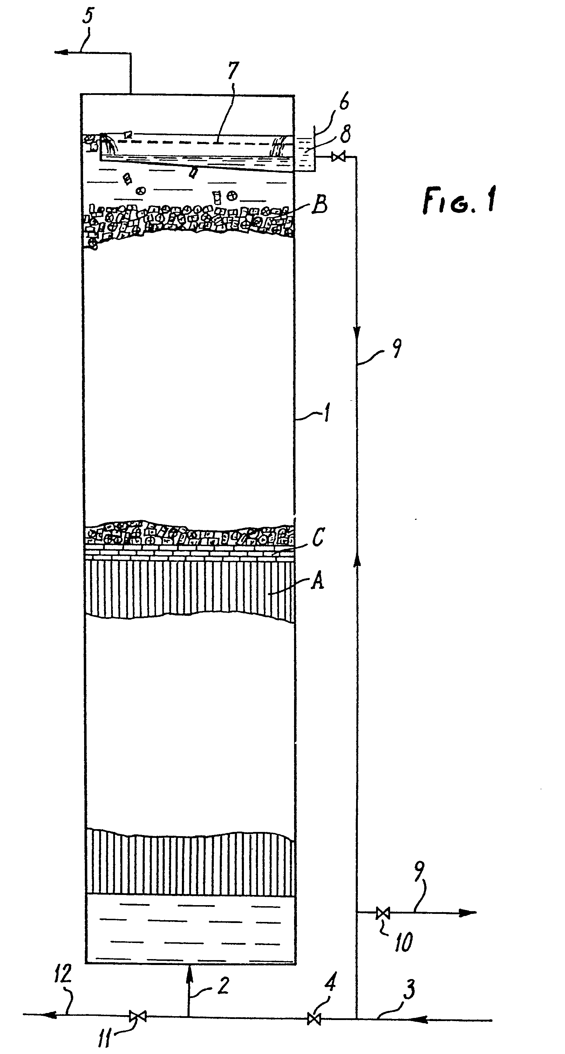

L'appareil suivant l'invention est, comme on le voit sur la Fig. 1, constitué par une enceinte fermée 1 dans laquelle sont disposées trois couches superposées de matériaux.

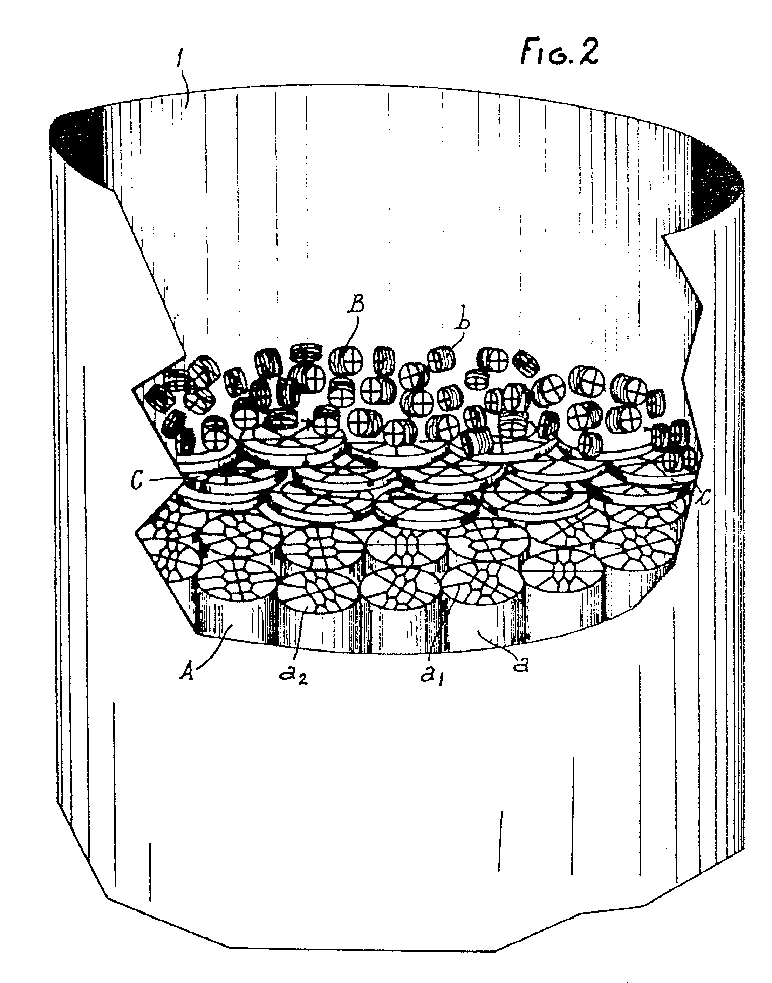

La couche inférieure A est, comme on le voit sur la Fig. 2, constituée par une réunion ordonnée de tubes $a$, dont le cloisonnement interne $a_1$ forme autant de canaux $a_2$ parcourus de bas en haut par l'effluent à traiter.

La couche supérieure B est constituée par des anneaux $b$ disposés en vrac, dont les caractéristiques ont été données plus haut.

Entre ces deux couches sont disposés, également en vrac, des corps cylindriques $c$ dont le diamètre est nettement supérieur à la hauteur, comme on le voit également sur la Fig. 2. Ces corps cylindriques sont cloisonnés de façon à déterminer les espaces par où passe l'effluent à traiter. L'empilage, en vrac, de ces corps cylindriques constitue la couche intermédiaire C. Les dimensions et l'agencement des éléments de cette couche sont tels, d'une part qu'ils peuvent reposer sur les tubes $a$ sans en obstruer les canaux, et également qu'ils s'opposent à tout passage des éléments $b$ de la couche B vers ceux de la couche A. Dans ces conditions, la couche intermédiaire C se comporte comme une sorte de plancher séparant nettement les deux couches superposées, empêchant la pénétration de l'une par les éléments de l'autre, avec, par rapport à un plancher, des avantages considérables tenant à la « souplesse » de la barrière ainsi constituée et au rôle qu'elle joue dans le fonctionnement de l'appareil.

Le liquide à traiter est introduit à la base de l'appareil par la canalisation 2 branchée sur la canalisation 3 d'amenée du liquide sur laquelle est prévue une vanne 4. Le liquide traverse successivement les deux couches de matériau A et B séparées par la couche intermédiaire C. Le gaz produit est évacué de l'appareil par la canalisation 5. L'eau traitée est reprise par la goulotte 6 munie d'une grille 7 et d'une garde d'eau 8. Elle sort de l'appareil par une canalisation 9 débouchant dans la goulotte 6 et munie d'une vanne 10.

Le lavage de l'appareil et l'extraction des boues formées sont réalisés par passage de haut en bas dans l'appareil d'eau brute, par inversion du sens de circulation de cette eau dans la canalisation 9. Les boues sortent par la canalisation 2 reliée, moyennant la vanne 11 alors ouverte, tandis qu'elle est fermée pendant le fonctionnement de l'appareil, à la canalisation 12.

Des essais comparatifs auxquels s'est livrée la Demanderesse, entre des filtres classiques des types décrits plus haut et un filtre suivant l'invention, il résulte que, à la différence de ces filtres classiques, le filtre suivant l'invention ne se colmatait pas même après un temps de fonctionnement fort long, permettait d'obtenir un rendement correct d'élimination de la DCO sans que l'on soit contraint d'abaisser les charges volumiques de l'appareil en effluent à traiter et enfin ne présentait pas, au fil du temps, des phénomènes de décrochage des boues avec déstabilisation de l'activité bactérienne.

**Revendications**

1. Appareil pour la filtration anaérobie d'eaux résiduaires consistant en un filtre à garnissage parcouru de bas en haut par l'eau à traiter et dans lequel le biogaz produit est recueilli à la partie supérieure de l'appareil, caractérisé en ce qu'il comporte deux couches superposées de matériaux de garnissage (A et B) séparées par une couche intermédiaire de matériau (C), le matériau (A) constituant la couche inférieure étant un matériau ordonné et les matériaux (B et C) étant des matériaux en vrac, la surface spécifique du matériau (B) étant plus importante que celle offerte par le matériau (A) et le matériau (C) étant constitué par des corps creux agencés, conformés ou dimensionnés de telle sorte que le matériau n'obture pas les canaux formés par le matériau (A) et supporte le matériau (B).

2. Appareil suivant la revendication 1, caractérisé en ce que le matériau (A) possède une surface spécifique importante et est constitué de tubes ou plaques ondulées disposés parallèlement et verticalement, formant des canaux par où passe l'eau à traiter.

3. Appareil suivant la revendication 1, caractérisé en ce que le matériau en vrac (B) de la couche supérieure de garnissage est constitué par des anneaux de surface spécifique très importante, avantageusement supérieure à 200 m²/m³ et d'un diamètre inférieur à leur hauteur.

4. Appareil suivant la revendication 1, caractérisé en ce que le matériau (C) de la couche intermédiaire de séparation des matériaux (A et B) est constitué par des corps creux cylindriques.

5. Appareil suivant la revendication 4, caractérisé en ce que le matériau (C) est constitué par des corps annulaires de diamètre très important par rapport à leur hauteur, au moins égal à 1,5 fois celui des tubes ou canaux que présente le matériau ordonné (A) de façon à ce que ces tubes reposent sur les tubes ou canaux sans les obturer.

6. Appareil suivant l'une quelconque des revendications 4 et 5, caractérisé en ce que les corps annulaires ont un diamètre égal ou supérieur à 4 fois leur hauteur, la surface spécifique de ces corps annulaires étant voisine de 100 m²/m³.

7. Appareil suivant l'une quelconque des revendications précédentes, caractérisé en ce qu'une grille de protection est disposée sur la goulotte de reprise de l'eau traitée, cette goulotte étant munie d'une garde d'eau.

8. Appareil suivant l'une quelconque des revendications précédentes, caractérisé en ce qu'il comporte un dispositif d'inversion des flux d'eau à traiter et d'eau traitée entrant dans l'appareil et en sortant, de façon à procéder au lavage de l'appareil et à l'évacuation des boues formées.

## Claims

1. An apparatus for the anaerobic filtration of waste water, consisting of a packed filter through which the water to be treated passes from the bottom upwards and in which the biogas produced is collected in the upper portion of the apparatus, characterized in that it includes two superimposed beds of packing materials (A and B) separated by an intermediate bed of material (C), the material (A) which forms the bottom bed being a material in a regular arrangement and the materials (B and C) being materials in bulk, the specific surface of the material (B) being greater than that presented by the material (A), and the material (C) consisting of hollow bodies so arranged, shaped or dimensioned that the material does not stop up the channels formed through the material (A) and supports the material (B).

2. An apparatus as in Claim 1, characterized in that the material (A) has a large specific surface and consists of tubes or corrugated plates arranged in parallel and vertically to form channels through which passes the water to be treated.

3. An apparatus as in Claim 1, characterized in that the bulk material (B) of the upper bed of packing consists of rings of very large specific surface, advantageously greater than 200 m²/m³, and of diameter less than their height.

4. An apparatus as in Claim 1, characterized in that the material (C) of the intermediate bed for separation of the materials (A and B) consists of cylindrical hollow bodies.

5. An apparatus as in Claim 4, characterized in that the material (C) consists of annular bodies of diameter which is very large with respect to their height and at least equal to 1.5 times the diameter of the tubes or channels exhibited by the regularly-arranged material (A) so that these tubes rest upon the tubes or channels without stopping them up.

6. An apparatus as in either of the Claims 4 or 5, characterized in that the annular bodies have a diameter equal to or greater than 4 times their height, the specific surface of these annular bodies being about 100 m²/m³.

7. An apparatus as in any one of the preceding Claims, characterized in that a protective grid is arranged across the spout for recovery of the treated water, this spout being equipped with a trap.

8. An apparatus as in any one of the preceding Claims, characterized in that it includes a device for reversal of the flows of water to be treated and treated water, entering and leaving the apparatus, so as to proceed with washing of the apparatus and discharge of the sludge formed.

## Patentansprüche

1. Vorrichtung für die anaerobe Filtration von Abwässern mit einem von unten nach oben von dem zu behandelnden Wasser durchströmten Filterkörper, bei welcher das erzeugte Biogas im oberen Teil der Vorrichtung gesammelt wird, dadurch gekennzeichnet, daß sie zwei übereinander angeordnete Füllkörperbetten (A und B) aufweist, die durch eine Materialzwischenschicht (C) getrennt sind, wobei das Material (A) des unteren Filterbettes ein geordnetes Material ist, während die Materialien (B und C) aus Schüttgut bestehen, daß die spezifische Fläche des Materials (B) größer als die des Materials (A) ist und daß das Material (C) durch Hohlkörper gebildet ist, die derart angeordnet, ausgebildet oder dimensioniert sind, daß das Material die vom Material (A) gebildeten Kanäle nicht verschließt und das Material (B) abstützt.

2. Vorrichtung nach Anspruch 1, dadurch gekennzeichnet, daß das Material (A) eine beträchtliche spezifische Oberfläche aufweist und aus parallel und vertikal angeordneten Rohren oder Wellplatten besteht, die Kanäle für den Durchgang des zu behandelnden Wassers bilden.

3. Vorrichtung nach Anspruch 1, dadurch gekennzeichnet, daß das Schüttgut (B) des oberen Füllkörperbettes aus Ringen mit sehr beträchtlicher spezifischer Oberfläche vorzugsweise größer als 200 m²/m³, und mit einem Durchmesser kleiner als ihre Höhe gebildet ist.

4. Vorrichtung nach Anspruch 1, dadurch gekennzeichnet, daß das Material (C) der die Materialien (A und B) trennenden Zwischenschicht aus zylindrischen Hohlkörpern gebildet ist.

5. Vorrichtung nach Anspruch 4, dadurch gekennzeichnet, daß das Material (C) aus ringförmigen Körpern mit sehr großem Durchmesser gegenüber ihrer Höhe und von wenigstens gleich dem 1,5-fachen von dem der das geordnete Material (A) bildenden Rohre oder Kanäle besteht, derart, daß diese rohrförmigen Körper auf den Rohren oder Kanälen ohne diese zu verschließen liegen.

6. Vorrichtung nach einem der Ansprüche 4 und 5, dadurch gekennzeichnet, daß die ringförmigen Körper einen Durchmesser gleich oder größer als das 4-fache ihrer Höhe aufweisen, wobei die spezifische Oberfläche dieser ringförmigen Körper bei ca. 100 m²/m³ liegt.

7. Vorrichtung nach einem der vorhergehenden Ansprüche, dadurch gekennzeichnet, daß auf der Sammelrinne für das behandelte Wasser ein Schutzgitter angeordnet und die Sammelrinne mit einem Überlauf versehen ist.

8. Vorrichtung nach einem der vorhergehenden Ansprüche, dadurch gekennzeichnet, daß sie eine Einrichtung zur Umkehr der Strömung des in die Vorrichtung eintretenden zu behandelnden Wassers und des die Vorrichtung verlassenden behandelten Wassers zur Rückspülung der Vorrichtung und Beseitigung der gebildeten Schlämme aufweist.

FIG. 1

FIG.2